# EUROPEAN PATENT APPLICATION

(11) **EP 0 892 538 A2**
(43) Date of publication of application: **20.01.1999**
(21) Application number: 98302616.2
(22) Date of filing: 02.04.1998
(51) Int. Cl.: H04M 3/42, H04M 3/50, H04Q 7/00

(54) **Class in-band service delivery over fixed wireless access communication systems**

(30) Priority: 18.07.1997 GB 9715141
(71) Applicant: NORTHERN TELECOM LIMITED, Montreal, Quebec H2Y 3Y4 (CA)
(72) Inventor: Baird, Anthony John, Torquay, Devon (GB); Parton, William James, Battersea, London SW11 1HJ (GB); Barnard, Paul, Totnes, Devon TQ9 5DZ (GB)
(74) Representative: Franks, Robert Benjamin

(57) **Abstract**

A signaling path between a central office switch (500) and a fixed radio access network terminal equipment (503) supporting one or a plurality of subscriber handsets (501, 502) comprises a radio base station (504) connected to the central office switch via a hardwired transmission link (505), and communicating with the network terminal equipment via a wireless link (507) operating in accordance with an air interface protocol such as described in International Standard Q931. In band service signals, eg of the CLASS type, issued by the central office switch on an in band channel are stored at the radio base station whilst A party to B party call set up is effected over an out of band signal path (512) between the central office switch and the network terminal equipment. Digital call set up signals (601, 602, 701, 702, 1101, 1102) experience an indeterminate period of delay over the wireless link prior to receipt by the network terminal equipment. After successful receipt of the call set up signals by the network terminal equipment, the radio base station (504) forwards the in band CLASS service signals (705, 1104) to the network terminal apparatus (503), and on to a connected subscriber handset. Alternatively, the central office switch (500) is modified so as to delay transmission of in band signaling until receipt of a call set up acknowledgment signal (604), confirming that the network terminal equipment has received call set up signals.

## Description

### Field of the Invention

The present invention relates to provision of central office switch services via in-voice band signals over a fixed wireless access system.

### Background to the Invention

In conventional analogue plain old telephone service (POTS) telecommunications systems, it is known to provide to domestic and business users a set of services known as Custom Local Area Special Services (CLASS), whereby a subscriber can access or control functionality provided by a central office switch for obtaining information, or for configuring a subscriber line. CLASS services emulate services known as "network services" often provided on a conventional PBX. In some cases these are accessed by a subscriber dialing pre-defined key sequences on his or her telephone handset. In other cases such services are bought services which are automatically generated by a service provider. Examples of such services include:
- **calling line identification** - a facility by which a subscriber can identify a phone number of an incoming call.
- **Integrated voice mail** - where a CLASS feature is used to provide an indication of voice mail waiting.

Such services are specified in ITU international standard V5.2 [International Telecommunications Union ITU-T Recommendation V5.2, available from ITU Sales and Marketing Service, Place de Nations, CH-1211 Geneva 20, Switzerland, E-Mail Sales@itu.com]. Various types of central office switches produced by different manufacturers may also support different selections of CLASS services, the selections differing from proprietor to proprietor. For example, Nortel Limited (Northern Telecom) specify proprietary CLASS services in their DMS-X specification, which are supported by Nortel DMS type switches available from Nortel Limited (Northern Telecom).

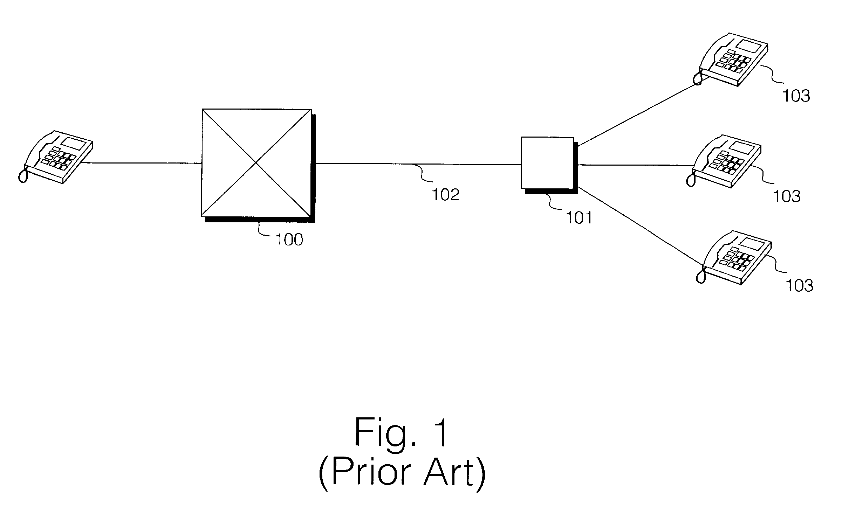

Referring to Fig. 1 herein, there is illustrated a prior art central office switch 100 comprising part of a prior art broad band network, the switch communicating with an item of customer premises equipment 101, over a hard wired transmission line 102, for example a coaxial cable or twisted copper wire pair, the customer premises equipment supporting a plurality of analogue terminal equipment 103, eg subscriber handsets. Between each subscriber handset and the central office switch there exists a subscriber line comprising a voice band channel which operates to carry voice or modem traffic, typically within a band of 300 Hz to 3400 Hz, and an out of voice band signaling channel which carries call set up signals, typically in the range 3800 Hz to 4200 Hz. The transmission line 102 supports a large number of such subscriber lines between the central office switch 100 and the plurality of subscriber handsets 103. Between the corresponding subscriber handsets 103 and the customer premises equipment 101, each subscriber line comprises an analogue channel which carries voice band data, and a digital channel which carries out of voice band signaling data. Between the central office switch and the customer premises equipment, the analogue data eg voice and/or modem traffic is digitally encoded by the central office switch and is sent down a multiplexed digital link of the transmission line 102 so producing a virtual analogue data channel, for carrying in band voice/modem data. On reaching the customer premises equipment the voice band data is sent over an analogue channel to the subscriber handset 103. Thus, for each subscriber line between central office switch and subscriber handset there exists an in voice band analogue data channel and an out of voice band signaling channel.

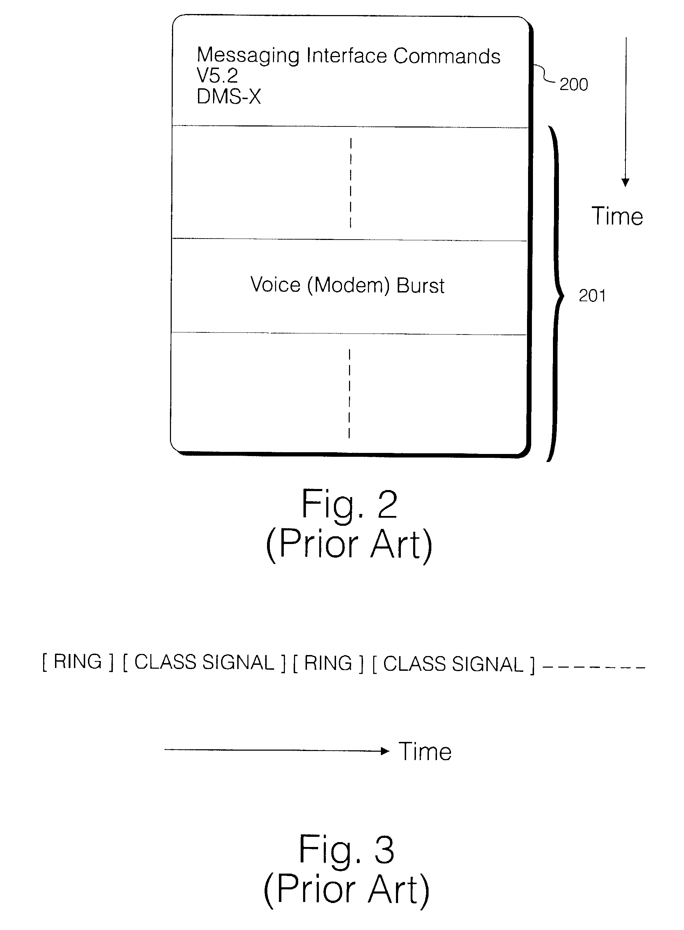

In the following example, operation of CLASS signals giving caller number identification will be given. To connect a call between an A party caller 104 having first telephone number 01803 682784 and a B party 103 having second telephone number 0171 380 2992 over a subscriber line, the B party subscriber handset receives digital call setup signals over an out of voice band digital signaling channel of a subscriber line. An associated voice band channel, over the same subscriber line carries voice and/or modem traffic once call set up has been established. Communication between the central office switch and the customer premises equipment on transmission line 102 is represented schematically in Fig 2 herein and comprises a serial burst of messaging commands in accordance with a standard protocol eg V5.2 or a proprietary protocol for example DMS-X. In a first time slot 200, the messaging commands operate to provide to the customer premises equipment 101 information describing in which time slots of a plurality of time slots 201, information corresponding to a voice band channel of the subscriber line is to be carried. For example, the V5.2 or DMS-X protocols may specify that in voice band data corresponding to a subscriber line telephone number 0183 682784 is being carried in a particular time slot within the plurality of time slots.

The customer premises equipment interprets this message and proceeds to ring the connected subscriber telephone handset corresponding to number 0171 380 2992, and generates ringing tone signals at the particular subscriber telephone, connecting the voice band signals of the specified time slots to the handset of that number over the corresponding analogue channel.

The conventional set of CLASS services make use of the parallel voice band channel between the central office switch 100 and the customer premises equipment 101 immediately after call set up. Whilst the central office switch 100 and the customer premises equipment 101 are making a connection using the out of band digital channel between the central office switch and the network access equipment and ringing a subscriber telephone handset, CLASS services are sent contained in modem bursts in band via the voice band channel. Signals representing calling line identification, and other CLASS services are sent in band along the voice channel to the customer premises apparatus whilst the subscriber handset is ringing, and before A party to B party connection is made. CLASS signals are sent from the customer premises equipment 101 to the subscriber analogue telephone handset 103 before, during or after an A party to B party connection is set up. Typically, the analogue user handset may indicate to a user that a service is available, eg calling line identification by a flashing light at the user handset.

As shown in Fig. 3 herein, CLASS services may be forwarded by the customer premises equipment to the analogue subscriber handset, in band in analogue format in intervals between bursts of analogue ring tone signals. For example, in Fig. 3, between analogue ring tone signals, there are modem bursts carrying CLASS signals, eg a signal containing information that a calling line's identification number is 0183 682784. The modem burst is decoded by the analogue handset and may be used to generate a liquid crystal display of caller number at the handset. By the above mechanism, CLASS services, similar to those provided in conventional digital handsets over hard wired transmission lines may be made available to CLASS compatible analogue handsets.

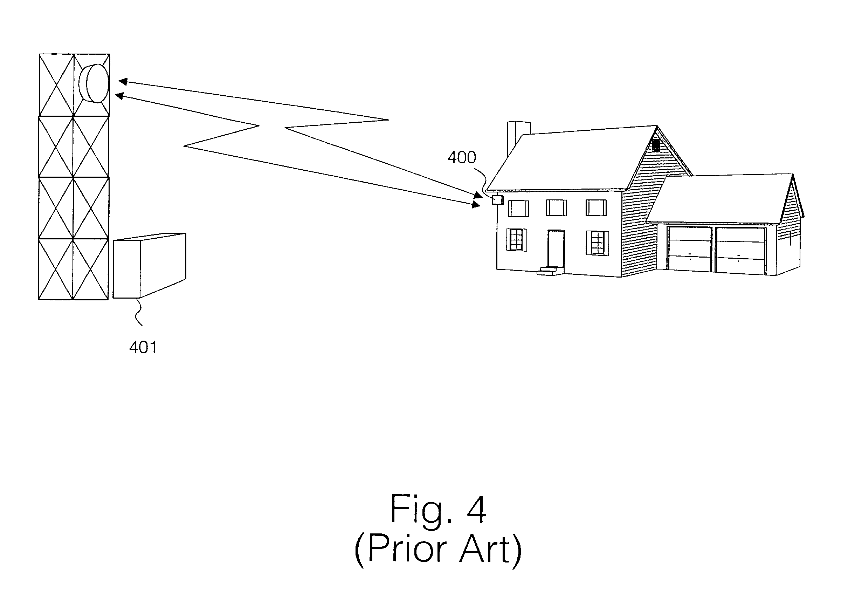

Large amounts of legacy access networks exist where central office switches are connected with access network apparatus by such hard wiring, eg coaxial cable, or twisted wire pairs. However, deployment of such an access network is expensive, due to the installation of the hard wiring cables between the customer premises and the domestic or business premises. Typically, such hard wiring is carried on overhead telegraph poles, or in underground trenches or conduits. Trenching costs for installation of new hard wiring may typically be of the order of $100 per meter, and installation of new hard wiring may involve considerable disruption in a neighborhood. As an alternative to hard wiring between the access network apparatus and domestic/business premises, it is known to install a fixed wireless access (FWA) system (otherwise known as fixed radio access FRA or wireless local loop WLL) in which the central office apparatus communicates with network terminal equipment at subscriber premises via a wireless link. As illustrated schematically in Fig. 4 herein, a network terminal equipment radio transceiver 400 at a subscriber's premises communicates with a radio base station 401 which provides cellular coverage over typically a 5 to 20 kilometre radius in urban environments. The wireless link typically operates at a 3.5 GHz centred frequency band. Each base station is connected to a central office switch via a back haul link comprising a conventional hard wired transmission link, microwave link or fibre optic cable link.

However, whilst the fixed wireless access link provides a cost effective replacement for hard wiring in the access network, the conventional fixed wireless access link does not provide support for CLASS services.

### Summary of the Invention

One object of the present invention is to provide a means of enabling provision of Custom Local Area Special Services (CLASS) type services over a fixed wireless access link.

Ideally, the specific implementations according to the present invention enable existing conventional central office switches to communicate CLASS type services with existing analogue subscriber handsets without modification to either central office switch or subscriber handset.

Signals originating at a central office switch may comprise service signals which are to arrive at a subscriber equipment in an analogue voice band channel of a subscriber line, and call set up signals which arrive at the subscriber equipment in a digital out of voice band channel.

According to a first aspect of the present invention there is provided in a telecommunications network, a method of providing central office switch services carried by service signals communicated over a subscriber line, comprising a voice band channel and an out of voice band digital signaling channel said subscriber line operating over a fixed wireless access link, wherein said method is characterized by comprising the steps of:
transmitting a call set up signal along said out of band digital signaling channel;
receiving an acknowledgment signal over said out of band digital channel, said acknowledgment signal acknowledging receipt of said call set up signal; and
in response to said acknowledgment signal, transmitting said service signals describing said central office switch services in said voice band channel.

Preferably said step of transmitting a call set up signal comprises transmitting said call set up signal over a digital channel of said wireless link. Said step of receiving an acknowledgment signal may comprise receiving said acknowledgment signal over said digital channel of a wireless link.

Said service signals may be transmitted in response to arrival of said acknowledgment signal at a central office switch.

Said service signals may be transmitted in response to arrival of said acknowledgment signal at a radio base station.

The invention includes telecommunications central office switch apparatus capable of providing service signals describing central office switch services over a plurality of voice band channels, characterized in that said switch apparatus is configured for operating to:
transmit a call set up signal over a digital signaling channel of a subscriber line operating over a fixed wireless access link;
receive an acknowledgment signal over said digital channel, said acknowledgment signal acknowledging receipt of said call set up signal; and
in response to said acknowledgment signal, transmitting said service signals describing said service within a said voice band channel.

According to a second aspect of the present invention there is provided in a telecommunications network, a method of providing services carried in a voice band channel of a subscriber line, wherein said method is characterized by comprising the steps of:
receiving service signals describing said services on a said voice band channel;
receiving a call set up signal on a digital channel;
transmitting said call set up signal over a wireless link;
delaying said service signals for a delay period; and
transmitting said service signals over said wireless link after said delay period.

Said step of delaying said service signals may comprise delaying said signals for a predetermined delay period.

The method may comprise the steps of:
receiving an acknowledgment signal over said wireless link; and
transmitting said service signals in response to receipt of said acknowledgment signal.

The invention includes a fixed wireless access radio base station apparatus characterized by comprising:
a memory device for storing digitized service signals;
means for determining a delay period for storing said digitized service signals; and
means for formatting said service signals over a fixed access wireless link;
wherein said memory device operates to store said service signals during said delay period and operates to release said service signals for transmission in a voice band channel over said wireless link in response to a signal produced by said delay period determining means.

Said means for determining said delay period may comprise a pre-configurable delay means.

Said means for determining a delay period may comprise a call set up acknowledgment detection means configured to detect a call set up acknowledgment signal received over a digital channel of a wireless link.

The invention includes in a radio base station apparatus of a fixed wireless access telecommunications system, a method of delivering services carried in a voice band channel of a subscriber line, wherein said method is characterized by comprising the steps of:
detecting a call set up signal received on a digital path of said subscriber line;
transmitting said call set up signals over a digital channel of a wireless link of said subscriber line;
receiving a set of service signals on said voice band channel of said subscriber line;
storing said service signals at said base station; and
after a delay period, transmitting said service signals over said wireless link of said subscriber line.

Said delay period may comprise a predetermined delay period.

Said delay period may comprise a period between detecting said received digital call set up signal and detecting a call set up acknowledgment signal received over said wireless link.

According to a third aspect of the present invention there is provided in a fixed wireless access radio base station of a telecommunication system, a method of delivering service signals carried in a voice band channel of a subscriber line, wherein said method is characterized by comprising the steps of:
receiving a digital call set up signal over an out of voice band digital path of said subscriber line;
receiving said service signals over a voice band path of said subscriber line;
transmitting said digital call set up signals and said service signals over a digital channel of a fixed wireless access link of said subscriber line.

Said digital call set up signals may be multiplexed with said service signals to produce a multiplexed signal. Said multiplexed signal may be transmitted over said digital channel of the wireless link.

The invention includes a fixed wireless access radio base station apparatus characterized by comprising:
transceiver means capable of receiving a digital signal comprising a call set up signal and a digitized service signal and capable of transmitting said call set up signals and said service signals over a wireless link; and
data storage means capable of storing said digitized service signals
wherein said data storage means operates to store said service signals prior to transmission of said service signals in a voice band channel over said fixed wireless access link.

### Brief Description of the Drawings

For a better understanding of the invention and to show how the same may be carried into effect, there will now be described by way of example only, specific embodiments, methods and processes according to the present invention with reference to the accompanying drawings in which:
Fig. 5 illustrates schematically a signal path between a central office switch and a network terminal apparatus including a fixed access wireless link in general form;
Fig, 6 illustrates a signaling sequence according to a first specific implementation of the present invention in which a central office switch is modified to await receipt of a call set up acknowledgment signal before transmitting in band class service signals;
Fig. 7 illustrates schematically a signaling sequence according to a second specific implementation of the present invention, in which a radio base station stores in band signals pending receipt of a call set up acknowledgment signal from a network terminal equipment;
Fig. 8 illustrates schematically a process operated by a base station configured in accordance with the second implementation;
Fig. 9 illustrates schematically functional elements comprising a radio base station according to the second implementation;
Fig. 10 illustrates schematically a specific mode of operation of a radio base station according to the second implementation;
Fig. 11 illustrates schematically a signaling sequence according to a third specific implementation of the present invention, in which a radio base station stores in band service signals pending receipt of confirmation from a network terminal equipment of receipt of call set up signals;
Fig. 12 illustrates schematically a method of operation of a radio base station configured in accordance with the third specific implementation;
Fig. 13 illustrates schematically functional elements of a radio base station configured in accordance with the third specific implementation; and
Fig. 14 illustrates schematically a specific method of operation of the radio base station of Fig. 13;

### Detailed Description of the Best Mode for Carrying Out the Invention

There will now be described by way of example the best modes contemplated by the inventors for carrying out the invention. In the following description numerous specific details are set forth in order to provide a thorough understanding of the present invention. It will be apparent however, to one skilled in the art, that the present invention may be practiced without using these specific details. In other instances, well known methods and structures have not been described in detail so as not to unnecessarily obscure the present invention.

In this specification, the terms "voice band path" and "voice band channel" herein are used in relation to signal transmissions between central office switch 500, base station 504 and subscriber transceiver 503 to mean a path or channel allocated for transmission of voice band signals destined for receipt in analogue form within voice band at an analogue subscriber apparatus. Typically but not exclusively such signals may originate in the range 300 Hz to 3400 Hz, and may comprise analogue data which has been converted to digitally encoded format and which may be sent along a multiplexed digital link.

Similarly, the terms "out of band path" and "out of band channel" when used in relation to signal transmissions between central office switch 500, base station 504 and subscriber transceiver 503 are used herein to mean a digital channel allocated for transmission of signals destined for receipt out of voice band at an analogue subscriber apparatus. Typically such signaling data may originate in the range 3800 Hz to 4200 Hz, although the invention is not limited to such a range.

The term "voice band" as used herein, means a set of frequencies in the normal human audio range and as used conventionally to carry audio signals in a subscriber line of a telecommunications system. Typically, a voice band extends over a frequency bandwidth of around 3300 Hz, and typically in the range 300 Hz to 3600 Hz, and the terms "in band" and "in voice band" are construed as signals occupying a voice band. The term "out of band" will be construed accordingly as being signals outside the voice band.

In this specification, the term "subscriber line" is used to mean a communications channel connecting a central office switch to an item of subscriber apparatus capable of receiving analogue signals. Typically but not exclusively such an item of subscriber apparatus may comprise a telephone handset or a facsimile machine.

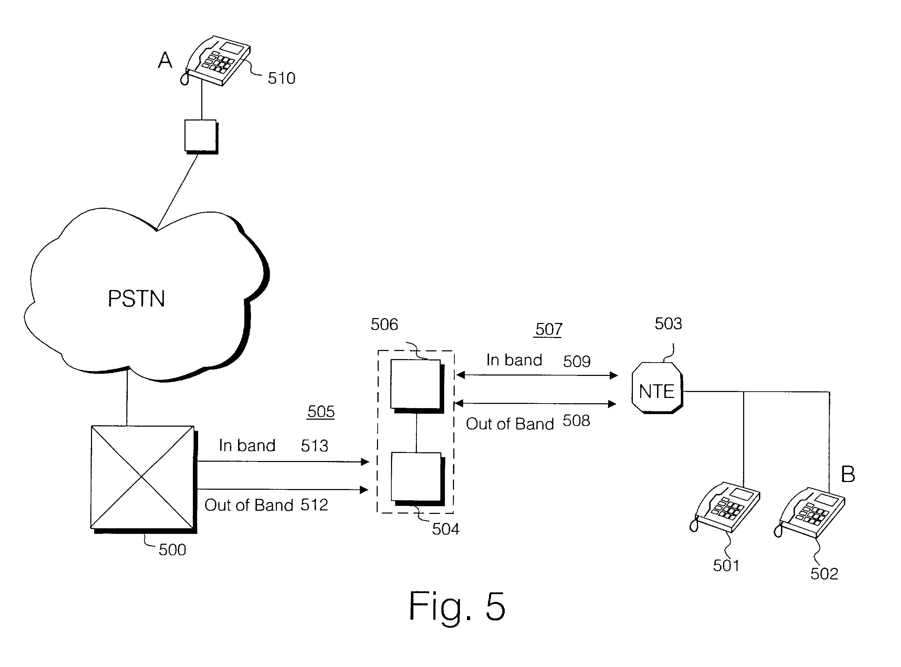

Referring to Fig. 5 herein, there is illustrated by way of example a signal path of a subscriber line between a conventional central office switch 500 and a network terminal equipment 503 comprising a subscriber transceiver which serves a plurality of conventional analogue subscriber telephone handsets 501, 502. The signal path comprises a radio base station 504, the base station communicating with the central office switch via a back haul transmission link 505, the back haul transmission link comprising for example a hardwired copper line, a permanent microwave link or an optical fiber cable; the base station 504 being provided with a transceiver and antenna arrangement 506 communicating with a plurality of said network terminal equipment, each serving one or a plurality of subscriber handsets. Typically, each base station may communicate with a plurality of subscriber transceivers, over a plurality corresponding respective wireless transmission links 507, the transmission links being in a frequency band centered abut 3.5 GHz, and having a range of up to 20 kilometers.

Base station 504 incorporates a conventional messaging interface supporting CLASS services, according to a conventional protocol, eg V5.2 or DMS-X protocols. The base station transceiver and antenna arrangement 506 communicates with the plurality of network terminal equipment 501, 502 using an air interface protocol, such as digital air interface protocol Q931. Signal path comprising the back haul transmission link 505, and the base station 504, replaces the hard wired transmission line 102 wireless transmission link 507 and subscriber transceiver 503 replaces the hard wire cable between the customer premises equipment 101 and telephone handsets 103 of the prior art hard wired system shown in Fig. 1 herein.

Each subscriber line between the central office switch and the network terminal equipment comprises an out of band signaling path and a voice band data path along its whole length. A voice band path of a subscriber line ending at a subscriber handset 501 comprises a voice band data channel 513 between central office switch and the base station; a wireless voice band data channel 509 between radio base station 504 and network terminal equipment 503 and a voice band channel between network terminal equipment 503 and subscriber handset 501. An out of band path of the subscriber line comprises an out of band data channel 512 between central office switch 500 and radio base station 504; a wireless out of band data channel between radio base station 504 and network terminal equipment 503; and an out of band channel between network terminal equipment 503 and subscriber handset 501. In practice, the digital signaling channel 512 and the voice band channel 513 may be different elements of a same multiplexed signal channel, eg a TDMA or CDMA signal, and similarly digital signaling channel 508 and voice band channel 509 may be different elements of a same multiplexed signal channel.

However, there is a timing problem preventing incorporation of in-band type CLASS services to analogue handsets over the fixed wireless access system as will be described by the following example:

Referring to Fig. 5 herein, on creation of an A party to B party connection, for example between an A party subscriber handset 510 across a public switched telephone network 511 including central office switch 500 to a B party, eg subscriber handset 502, call set up is effected over the out of band signaling path as follows. Central office 500 sends a digital call set up signal over out of band digital channel 512 of back haul transmission line 505, and sends CLASS service signals within voice band time slots over back haul transmission line 505. The call set up signals and CLASS service signals are transmitted by the central office switch 500 substantially simultaneously. The digital call set up signals and in band CLASS service signals arrive at base station 504 substantially simultaneously. Thus, the digital call set up signals arrive at base station 504 with approximately the same time relationship compared to the in band CLASS signals, as they were transmitted from the central office switch 500. On arrival at the base station 504, the out of band call set up signaling and the in-band service signals are retransmitted by transceiver antenna arrangement 506 across wireless link 507 to network terminal apparatus 503. The wireless link 507 supports both in band voice/modem data and out of band call set up data over corresponding in band channel 508 and out of band channel 509 respectively. The wireless digital link 507 uses a re-transmission process embedded in the air interface protocol (eg Q931) to ensure reliability and the wireless link 507 has characteristics of incurring high delay. Signals transmitted over the wireless link are acknowledged by network terminal equipment 503 on their receipt. If an error occurs and acknowledgment is insufficient or absent, base station 504 re-transmits the signals. However, a disadvantage of this handshaking procedure is that there can be a significant delay in transmission over the wireless link, which may be of indeterminate duration depending upon whether errors occur in the wireless transmission or not. The transmission delay over the wireless link 507 may be of the order of tens of milliseconds, up to in a very bad case, of the order of 5 or 6 seconds. Thus, CLASS service signals transmitted by the central office switch 500 on the voice band path simultaneously with digital call set up signals on the out of band path cannot be guaranteed to arrive at the network terminal apparatus 503 within a short time of their transmission, due to the indeterminate, and potentially long delay incurred by the wireless link digital channel. Since the in band path between the subscriber transceiver 503 and a network terminal equipment, eg subscriber handset 501 cannot be established until the appropriate network terminal equipment has responded to call set up signaling, this causes a problem for implementation of in band CLASS services transmitted on the in band channel, because CLASS service signals may arrive at the base station 504 before call set up has been achieved through signaling on the wireless link 507. Under these circumstances, CLASS service signals arriving at base station 504 cannot be forwarded to the network terminal equipment 503 because call set up has not yet been achieved. The call set up process overlaps the CLASS service signaling, with the result that CLASS service signals are lost at the base station 504 without arriving at the network terminal equipment 503.

A plurality of different implementations are presented herein to address this problem.

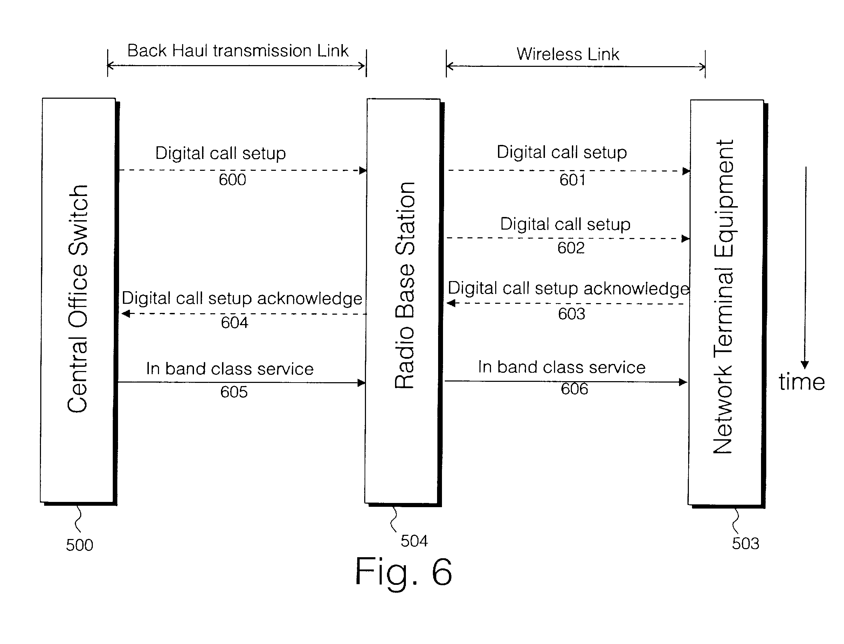

According to a first implementation, central office switch 500 waits until a call is set up with the B party over the wireless link, before transmitting in-band CLASS service signals over the wireless link. A sequence of events according to this implementation is illustrated schematically in Fig. 6 herein. In step 600, central office switch 500 transmits an out of band digital call set up signal 600 to base station 504 over the out of band channel of the back haul transmission link 505. This signal arrives at base station 504 reliably and with low delay. In step 601 the base station 504 transmits the digital call set up signal over the wireless link 507, eg in accordance with digital air interface protocol Q931. If the transmitted call set up signal is reliably received at network terminal apparatus 503, in step 603 the network terminal apparatus transmits a digital call set up acknowledgment signal back to base station 504. However, if digital call setup signal is not reliably received in step 601, base station 504 proceeds to re-transmit the out of band digital call set up signal in step 602. Base station 504 attempts to re-transmit the digital call set up signal until it receives the digital call set up acknowledgment signal from the network terminal apparatus 501. If errors occur in the communication between base station 504 and network terminal apparatus 503 on the wireless link 507, a delay between transmission of the digital call set up and receipt of the digital call set up acknowledgment signal may occur. The delay may typically be of the order of 100 milliseconds, but in a bad case may extend to the order of a few seconds. The transmission delay over the wireless link is not of fixed duration, but is indeterminate and may differ for different call set ups. On receipt of the digital call set up acknowledgment signal, base station 504 re-transmits the digital call set up acknowledgment signal back to the central office switch 500 reliably and with low delay over the out of band channel of the back haul transmission link 505 in step 604. Central office switch 500, on receipt of the digital call set up acknowledgment signal proceeds to transmit in-band CLASS service signals, which travel over the back haul transmission link 505, and then over the wireless link 507 to be received by the network terminal apparatus 503. By in-band, it is meant that the CLASS service signals are transmitted within a voice band channel through which analogue voice or modem signals typically having bandwidth 300 Hz to 3400 Hz are normally transmitted, albeit that the voice or modem signals may be encoded and digitized for part of the transmission.

Using this method, since the central office does not transmit in voice band CLASS service signals until call set up has been achieved, network terminal apparatus 503 is able to supply the CLASS service signals to the subscriber handset reliably, since the voice band connection between central office switch 500 and B party telephone handset 502 is already made before the network terminal apparatus receives the CLASS service signals.

However, this implementation has a disadvantage of requiring modification to central office switch 500. For legacy networks having existing prior art central office switches such modification requires reconfiguring the switch control mechanisms of the prior art central office switches. Although such reconfiguration may in practice comprise changing a relatively small number of lines of code in a control program within central office switch 500, such code changes are not readily implemented. For example, in the DMS type switches produces by Nortel Limited (Northern Telecom) the control program comprises of the order of several million lines of code. Control of the switch is implemented through a proprietary switch language, and any changes to the code must be tested within the whole control system to ensure they do not introduce errors to any other functions performed by the switch. Changes to code are strictly regulated and must pass through several levels of reliability testing and authorizations before they can be incorporated into a code release for reconfiguration of the switch hardware. Typical time scales between code releases may be of the order of months to years. Further, a plurality central office switches in a broad band network may comprise switches of different types by the same manufacturer, or of different proprietary manufacture, necessitating a plurality of different upgrades of switches, with incumbent costs and delays in implementation.

According to a second specific implementation, central office switch 500 transmits call set up signals substantially simultaneously with class service signals along back haul transmission line 505 to the base station 504 and the CLASS service signals are delayed at the base station 504 for a pre-determined delay time, the delay time being set to be long enough for call set up to occur, before the CLASS service signals are forwarded by the base station 504 to the network terminal equipment 503 once the call has been set up. This approach has an advantage that changes to legacy central office switches are not required and no modification to legacy network terminal equipment is required.

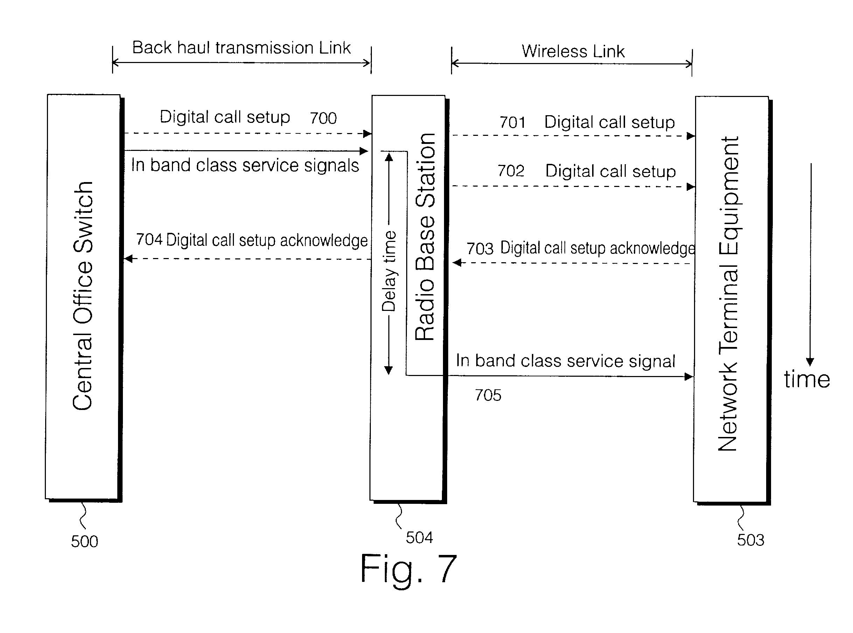

A sequence of events according to the second implementation is illustrated schematically in Fig. 7 herein. In step 700, central office switch 500 transmits a digital out of band call set up signal substantially simultaneously with an in band CLASS service signal to base station 504 for setting up a call between an A party subscriber and a B party subscriber. The out of band call set up signal and in band CLASS service signal arrive substantially simultaneously at base station 504. In step 701, base station 504 forwards the out of band call set up signal to the network terminal equipment 503 over wireless digital channel 508. Meanwhile, base station 504 stores incoming class service signals received from the in band channel of the back haul transmission link 505. If the digital call set up signal transmitted in step 701, in accordance with the air interface protocol is not acknowledged by the network terminal equipment 503, in step 702, base station 504 repeats transmission of the digital call set up signal over the wireless transmission link 507 in accordance with air interface transmission protocol, eg Q931. On receipt of the digital call set up signal, network terminal equipment 503 transmits a digital call set up acknowledgment signal to base station 504 in step 703. On receipt of the digital call set up acknowledgment signal over wireless link 507, base station 504 forwards the digital call set up acknowledgment signal to the central office switch 500 over the digital channel of the back haul transmission link 505, and the A party to B party call is set up. Meanwhile, in band CLASS service signals received in the voice band channel of the back haul transmission link 505 by the base station 504 have been stored at the base station 504. After a predetermined delay time, base station 504 transmits the stored CLASS service signals in band across wireless link 507 to the network terminal equipment 503, which forwards the in band CLASS service signals to the subscriber handset in analogue form along an analogue portion of the subscriber line. The delay time D is pre-configured to be longer than a time required to set up the A party to B party connection. Since the CLASS service signals are carried in a voice band, typically in the range 300 Hz to 3400 Hz, other signals, for examples ring tone signals, may be stored locally at the base station 504 along with the CLASS service signals, pending completion of call set up.

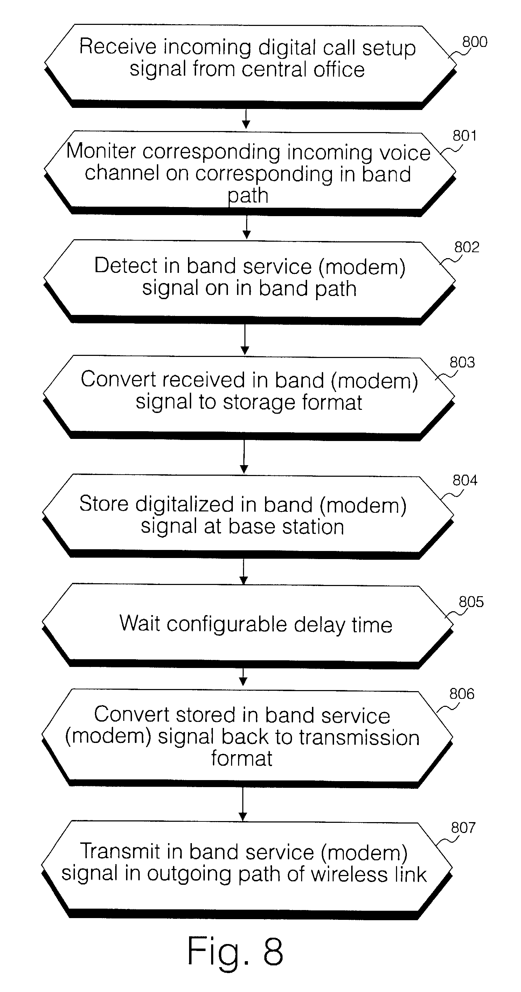

Referring to Fig. 8 herein, there are illustrated schematically a set of process steps carried out at base station 504, according to the second implementation. In step 800, the base station receives the incoming digital call set up signal from the central office switch 500 over the digital channel of back haul transmission link 505. Receipt of the incoming digital call set up signal activates base station 504 to monitor the corresponding incoming in band signals specified in the message command protocol, eg V5.2 or DMS-X in step 801. In step 802, the base station detects incoming in band CLASS service signals. Such signals may be carried as a series of modem bursts positioned between ring tone signals, as described in Fig. 3 herein. In step 803, base station 504 converts the in band CLASS service signals to a storage format, and stores the digitized in band CLASS service signals in step 804. In step 805, the digitized in band CLASS service signals are stored for a delay time D which is pre-setable. Meanwhile, the base station 504 retransmits the digital call set up signals over wireless link 507 to the network terminal equipment, which acknowledges receipt of the digital call set up signal by return of a digital call set up acknowledgment signal transmitted from the network terminal equipment to base station 504 over wireless link 507, the call set up acknowledgment signal being retransmitted by the base station 504 to the central office switch 500, which completes a call set up procedure. At the end of the delay time D, the call set up procedure has already occurred, and base station 504 proceeds in step 806 to convert the digitized stored in band CLASS service signals back to a transmission format, and to transmit the in band CLASS service signals to the network terminal equipment over wireless link 507 in step 807. Network terminal equipment 503 receives the in band CLASS service signals after A party to B party call set up connection has been made, and converts the in band CLASS service signals to analogue format for passage to the subscriber handset 501.

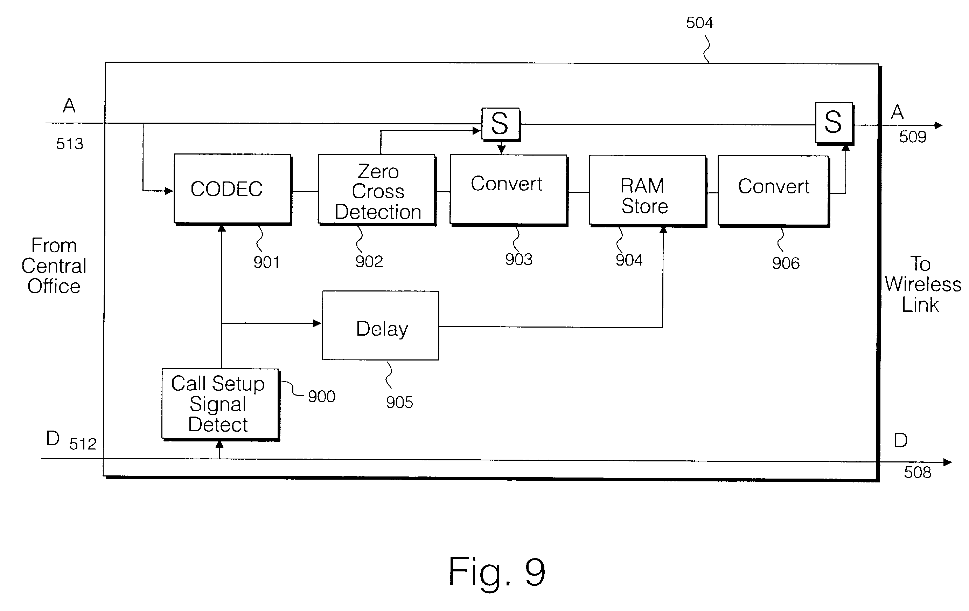

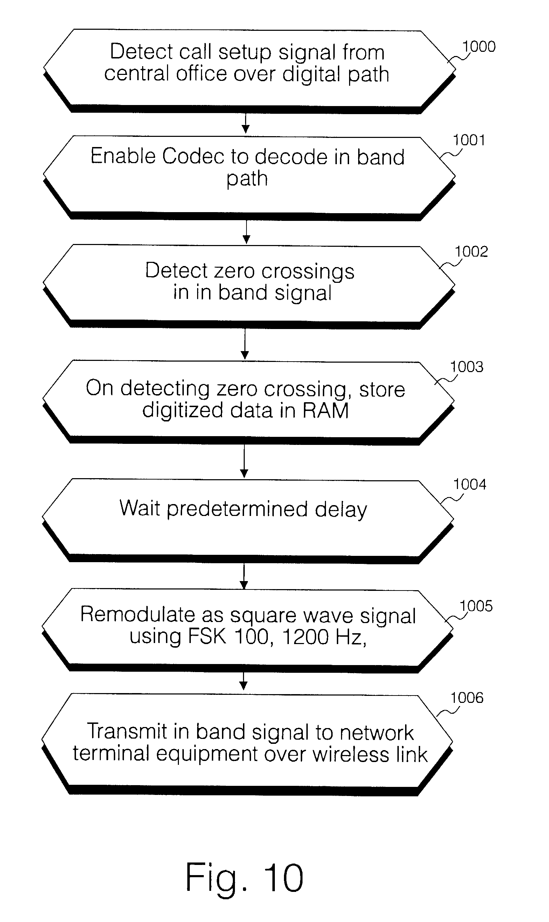

Referring to Fig. 9 herein, there is illustrated elements of functionality at base station 504 according to the second implementation, and in Fig. 10 is shown schematically steps for a specific method of operation of the base station configured for operating according to the second implementation.

Functional elements comprising the base station 504 modified to operate in accordance with the second implementation comprise a call set up signal detector 900, a coder decoder (codec) 901, a zero crossing detector 902, in band signal converter 903, a random access memory store 904, a delay device 905, and an in band signal re-converter 906.

In step 1000 digital call set up signal is received from the central office over out of band channel 512 of the back haul transmission link 505. The received call set up signal is detected by call set up signal detector 900, which initiates a codec 901 to decode signals received as a 1200 Baud frequency shift keyed FSK signal on in band channel 513 of back haul transmission link 505 in step 1001. The actual frequencies used are specific to the local and national networks types and central office switches types. Zero crossing detector 902 searches for zero crossings in the in band service signal in step 1002. Zero crossings may be searched in the 1200 Baud frequency shift keyed (FSK) signal. In step 1003, on detecting a zero crossing, indicating that CLASS service signals are present, signals on the in band path are input into converter 903 which converts the CLASS service signals to a digital format suitable for storage. The digitized CLASS service signals are stored in memory 904 for a pre-determined delay period D controlled by delay element 905, in step 1004. The delay period D commences upon receipt of call set up signal in step 1000, and terminates at the end of the predetermined delay period D. At the end of the delay period D, the digitized CLASS service signals are output from the data storage device 904 and converted back to a form suitable for further transmission, for example by re-modulating as square wave signals using frequency shift keying at frequencies of 100 Hz and 1200 Hz, in step 1005 by transmission converter element 906. In step 1006, the reconstituted in band CLASS service signals are transmitted to the network terminal equipment over wireless link 507. Meanwhile, call set up between the A party subscriber and B party subscriber has been completed over the digital path within the pre-configurable delay time D.

According to a third specific implementation of the present invention, central office switch 500 sends a digital call set up signal and an in band CLASS service signal across back haul transmission link 505 to base station 504 substantially simultaneously. On arrival of the in band service and out of band digital signals at base station 504, the base station stores the in band CLASS service signals whilst completing A party to B party call set up procedure. Once the base station 504 receives a call set up acknowledgment signal from the network terminal equipment 503 acknowledging that the network terminal apparatus has successfully received the call set up signal, base station 504 forwards the stored CLASS service signals across the wireless link 507 to the network terminal equipment 503.

The third specific implementation has an advantage of requiring no modification to existing legacy central office switches or to existing legacy network terminal equipment, and of delaying in band service signals substantially only for as long as is necessary for call set up to be confirmed by the network terminal equipment.

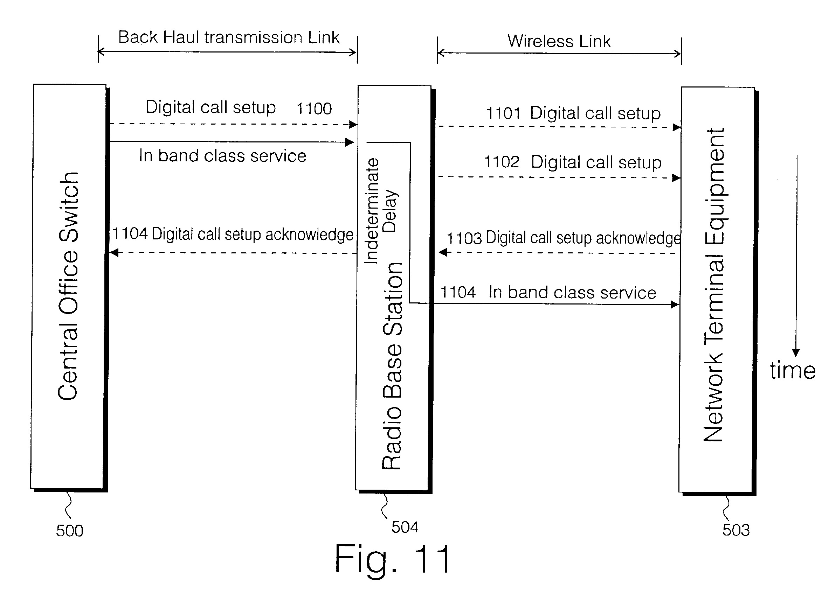

A sequence of events according to the third implementation is illustrated schematically in Fig. 11 herein. In step 1100, central office switch 500 transmits digital call set up signal and in band CLASS service signals along back haul transmission link 505 to base station 504. The out of band digital call set up signal and in band CLASS service signal arrive at base station 504 substantially simultaneously. In step 1101, base station 504 forwards the out of band digital call set up signal over wireless link 507 to network terminal equipment 503. Meanwhile, the received in band CLASS service signal is stored locally at base station 504. Reliable transmission over wireless link 507 may take an indeterminate amount of time, typically in the range 100 milliseconds, but up to 5 or 6 seconds to occur. On reliable receipt of the out of band digital call set up signal over the wireless link 507, network terminal equipment 503 transmits a digital call set up acknowledgment signal to base station 504 in step 1103. Reliable communication of the digital call set up acknowledgment signal in step 1103 may also take an indeterminate amount of time. The in band service signals are delayed by storage at the base station until receipt of the acknowledgment signal. On receipt of the digital call set up acknowledgment signal by the base station 504, the base station transmits the stored in band CLASS service signal to the network terminal equipment in step 1104. The in band CLASS service signal is transmitted from the base station to the network terminal equipment after the base station has received the digital call set up acknowledgment signal, confirming receipt of the digital call set up signal by the network terminal equipment.

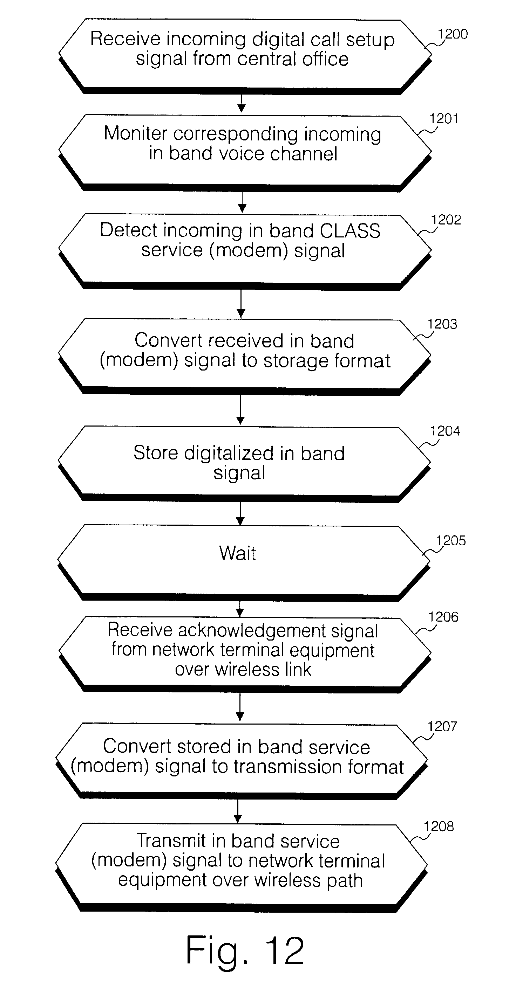

Referring to Fig. 12 herein, there is illustrated schematically steps of a process implemented at the base station 504 in the third implementation. In step 1200 the base station receives the incoming out of band digital call set up signal from the central office. Base station 504 monitors the incoming in band channel from the central office switch in step 1201, and on detecting an incoming in band CLASS service signal, for example a modem signal, on the incoming in band path from the central office switch 500 in step 1202, the base station converts the received in band CLASS service signal to digital format suitable for storage in step 1203. The digitized in band CLASS service signal is stored locally at the base station in step 1204 and is kept stored during a delay period in step 1205. During the delay period, the base station forwards the out of band digital call set up signal across wireless link 507 to the network terminal equipment and call set up is established over a digital path to the central office switch. In step 1206, the base station receives a call set up acknowledgment from the network terminal equipment over the wireless link 507. Since the network terminal equipment does not transmit the call set up acknowledgment signal until it has reliably received the call set up signal, receipt of the call set up acknowledgment signal by the base station 504 is interpreted by the base station as establishing that A party to B party call set up has been made. In step 1207, base station 504 converts the stored digitized in band CLASS service signals back to transmission format, typically by re-modulation at 100 Hz and 1200 Hz frequency shift keyed, and the reconverted in band CLASS service signals are transmitted from the base station 504 to the network terminal apparatus 503 over wireless link 507 in step 1208.

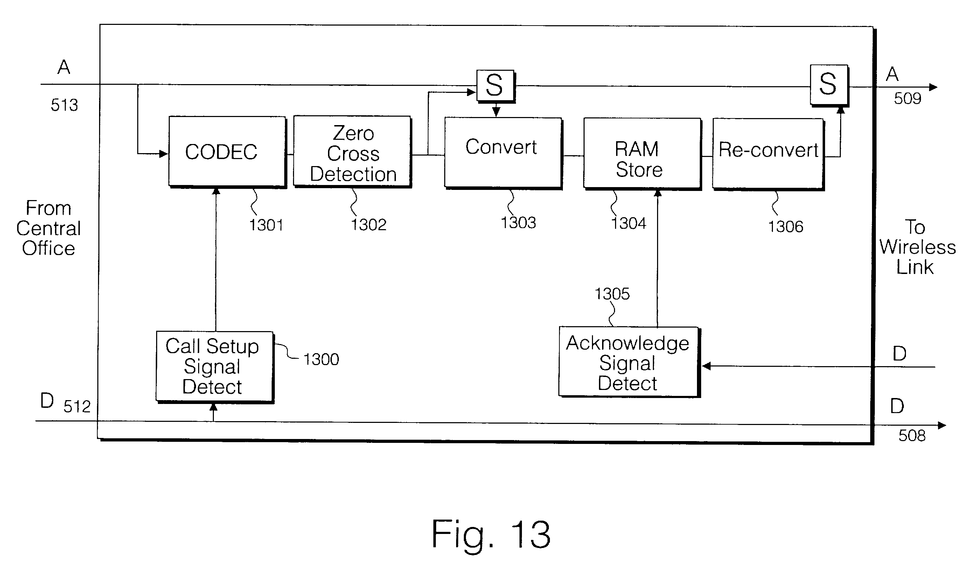

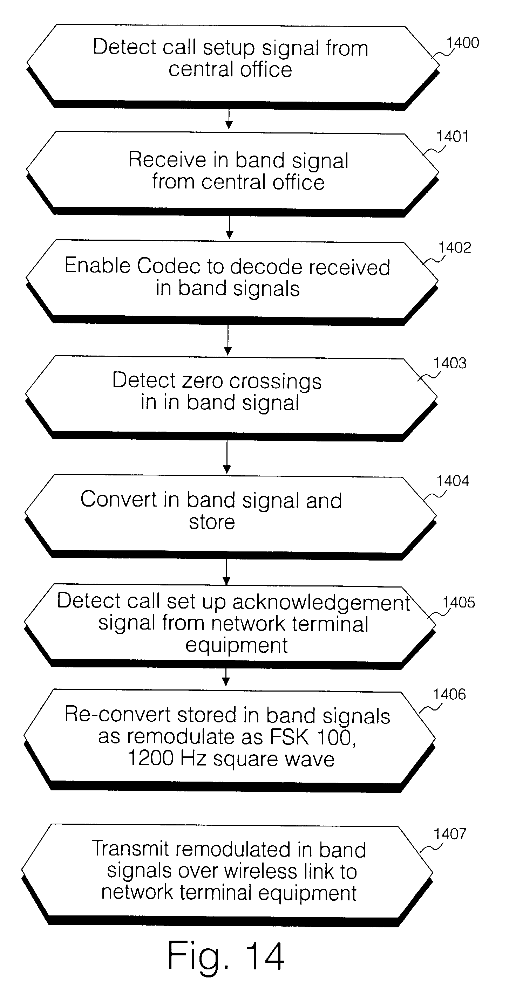

Referring to Fig. 13 herein, there is illustrated in overview functional elements comprising base station 504 suitable for operating the third implementation, and in Fig. 14 herein is illustrated a specific method operation of the base station incorporating elements as shown in Fig. 13.

A radio base station modified for operating in accordance with the third implementation comprises a call set up signal detector 1300, a coder decoder (codec) 1301, a zero crossing detector 1302, a digital convertor 1303, a random access memory store 1304, an acknowledgment signal detector 1305, and a digital to re-converter 1306.

In step 1400, call set up signal detection element 1300 detects a digital call set up signal received from central office switch 500. Codec 1301 receives in band signals over in band channel 513 of the back haul transmission link in step 1401, and decodes the in band signals in step 1402 in response to detection of the call set up signal in step 1400. Zero crossing detector 1302 detects zero crossings in in band signals in step 1403, and digital converter 1303 digitizes the in band signals to a form suitable for memory storage, which are stored in random access memory 1304 in step 1404. Incoming in band CLASS service signals continue to be stored in the random access memory 1304 whilst the base station forwards the digital set up signals onto the network terminal equipment over wireless link 507. Reliable transmission of the digital call set up signal takes an indeterminate amount of time, during which received in band CLASS service signals continue to be decoded, and converted into digitized storage format, and stored in the random access memory. Typically, between a few bytes and 128 bytes of digitized in band CLASS service signal may be stored in the random access memory. On detection of a digital call set up acknowledgment signal received from the network terminal equipment in step 1405 by call set up acknowledgment detector 1305, the stored digitized in band CLASS service signals are output from the random access memory sequentially in the order in which they were input, and reconverted to a format suitable for transmission in re-converter 1306 in step 1406. The in band CLASS service signals are re-modulated as, for example, 100 Hz and 1200 Hz square wave signals, which are transmitted in band over wireless link 507 to the network terminal equipment 503.

Conversion of the stored digitized in band CLASS service signals back to transmission format and transmission of the reconstituted in band CLASS service signals over wireless link 507 is made in response to detection of a digital call set up acknowledgment signal received from network terminal apparatus 503. A party to B party call set up is effected substantially simultaneously with commencement of transmission of in band signals over wireless link 507.

## Claims

1. In a telecommunications network, a method of providing central office switch services carried by service signals communicated over a subscriber line comprising a voice band channel (509, 513), and an out of voice band digital signaling channel (508, 512) said subscriber line operating over a fixed wireless access link (507) wherein said method is characterized by comprising the steps of:
transmitting a call set up signal (600, 601; 1100, 1101) along said out of band digital signaling channel;
receiving an acknowledgment signal (603, 604; 1103, 1104) over said out of band digital signaling channel, said acknowledgment signal acknowledging receipt of said call set up signal; and
in response to said acknowledgment signal, transmitting said service signals describing said central office switch services in said voice band channel.

2. The method as claimed in claim 1, wherein said step of transmitting a call set up signal comprises transmitting said call set up signal over a digital channel of said wireless link; and
said step of receiving an acknowledgment signal comprises receiving said acknowledgment signal over said digital channel of said wireless link.

3. The method as claimed in claim 1 or 2, wherein said service signals are transmitted in response to arrival of said acknowledgment signal (604) at a central office switch.

4. The method as claimed in claim 1 or 2, wherein said service signals are transmitted in response to arrival of said acknowledgment signal (1103) at a radio base station.

5. A telecommunications central office switch apparatus (500) capable of providing service signals describing central office switch services over a plurality of voice band channels, characterized in that said switch apparatus is configured for operating to:
transmit a call set up signal (600, 601; 1100, 1101)over a digital signaling channel of a subscriber line operating over a fixed wireless access link (507);
receive an acknowledgment signal (603, 604; 1103, 1104) over said digital channel, said acknowledgment signal acknowledging receipt of said call set up signal; and
in response to said acknowledgment signal, transmitting said service signals describing said service within a said voice band channel.

6. In a telecommunications network, a method of providing services carried in a voice band channel, wherein said method is characterized by comprising the steps of:
receiving service signals describing said services on a said voice band channel;
receiving a call set up signal (700, 1100) on a digital channel;
transmitting said call set up signal over a wireless link (507);
delaying said service signals for a delay period; and
transmitting said service signals (705, 1104) over said wireless link after said delay period.

7. The method as claimed in claim 6, wherein said step of delaying said service signals comprises delaying said signals for a predetermined delay period (805).

8. The method as claimed in claim 6, further comprising the steps of:
receiving an acknowledgment signal (1103) over said wireless link; and
transmitting said service signals (1104) in response to receipt of said acknowledgment signal.

9. A fixed wireless access radio base station apparatus (504) characterized by comprising:
a memory device (904, 1304) for storing digitized service signals;
means for determining a delay period (905, 1305) for storing said digitized service signals; and
means for transmitting said service signals over a fixed access wireless link (507);
wherein said memory device operates to store (804, 1204) said service signals during said delay period and operates to release said service signals for transmission in a voice band channel over said wireless link in response to a signal produced by said delay period determining means.

10. A fixed wireless access radio base station apparatus as claimed in claim 9 wherein said means for determining said delay period comprises a pre-configurable delay means (905).

11. A fixed wireless access radio base station apparatus as claimed in claim 9, wherein said means for determining a delay period comprises a call set up acknowledgment detection means (1305) configured to detect a call set up acknowledgment signal received over a wireless link (507).

12. In a radio base station apparatus (504) of a fixed wireless access telecommunications system, a method of delivering services carried in a voice band channel of a subscriber line, wherein said method is characterized by comprising the steps of:
detecting (1000, 1400) a call set up signal received on a digital path (700, 1100) of said subscriber line;
transmitting (701, 1101) said call set up signals over a digital channel of a wireless link of said subscriber line;
receiving (802, 1202) a set of service signals on said voice band channel of said subscriber line;
storing (804, 1204) said service signals at said base station;
after a delay period (805, 1205), transmitting (807, 1208) said service signals over said wireless link of said subscriber line.

13. The method as claimed in claim 12, wherein said delay period comprises a predetermined delay period (1004).

14. The method as claimed in claim 12, wherein said delay period comprises a period (1205) between detecting said received digital call set up signal and detecting a call set up acknowledgment signal received over said wireless link.

15. In a fixed wireless access radio base station of a telecommunication system, a method of delivering service signals carried in a voice band channel of a subscriber line, wherein said method is characterized by comprising the steps of:
receiving a digital call set up signal (512) over a digital path of said subscriber line;
receiving said service signals (513) over a voice band path of said subscriber line; and
transmitting said digital call set up signals and said service signals over a digital channel (508) of a fixed wireless access link (507) of said subscriber line.

16. A fixed wireless access radio base station apparatus (504) characterized by comprising:
transceiver means (900-906; 1300, 1306) capable of receiving a digital signal comprising a call set up signal and a digitized service signal and capable of transmitting said call set up signals and said service signals over a fixed wireless access link (507); and
data storage means (904, 1304) capable of storing said digitized service signals
wherein said data storage means operates to store said service signals prior to transmission (705, 1104) of said service signals in a voice band channel over said fixed wireless access link.
